# EUROPEAN PATENT APPLICATION

(11) **EP 1 995 477 A1**
(43) Date of publication of application: **26.11.2008**
(21) Application number: 06712914.8
(22) Date of filing: 02.02.2006
(51) Int. Cl.: F16C 29/12

(54) **MOVEMENT DEVICE**

(71) Applicant: Yugen Kaisha Hama International, Okaya-shi Nagano 394-0034 (JP)
(72) Inventor: HAMA, Tomio, Okaya-shi Nagano 394-0034 (JP)
(74) Representative: Gill, Stephen Charles
(86) International application number: PCT/JP2006/301771
(87) International publication number: WO 2007/088620

(57) **Abstract**

The present invention provides a movement device, in which a clearance between a contact body and a support rail is automatically eliminated, without an increase in preload and even with abrasion of the contact body and the support rail, so as to eliminate play of the movement device. The movement device comprises: a support rail 2; a moving body 4 being guided by the support rail 2 and moved relative to the support rail 2; contact bodies 5, 6 and 7 being provided to the moving body 4 and individually in contact with the support rail 2 from different directions; and preload means 8 for always pressing at least one of the contact bodies 5, 6 and 7 onto the support rail 2 with a prescribed force, the preload means 8 presses the contact body 7 of the contact bodies 5, 6 and 7, which contacts the support rail 2 from a direction substantially opposite to a direction of a load applied to the support rail 2 via the moving body 4, onto the support rail, and the preload means has one-way check means for prohibiting the contact body 4 to move away from the support rail 2.

## Description

### FIELD OF TECHNOLOGY

The present invention relates to a movement device comprising: a support rail being fixed to a base body; a moving body being guided by the support rail; a plurality of contact bodies being provided to the moving body and individually contacting the support rail form a plurality of directions; and preload means being provided to the moving body and always pressing at least one of the contact bodies toward the support rail with a prescribed force.

### BACKGROUND TECHNOLOGY

In a convention movement device having a moving body capable of moving along a support rail, a preload is applied to the moving body and the support rail so as to eliminate play of the moving body and smoothly move the moving body.

In a convention movement device disclosed in Patent Document 1, balls are provided between a rail (support rail ) and a moving body (slider) so as to move the moving body by using rotation of the balls (see paragraphs 0002 and 0012 and Figs. 1 and 2 of Patent Document 1). In this movement device, a preload is applied to the moving body and the support rail by fitting balls, whose diameter is slightly greater than a clearance between the moving body and the support rail (see the paragraph 0002 of Patent Document 1).

By the method of applying the preload disclosed in Patent Document 1, the clearance between the moving body and the support rail is closed by the balls, so that play can be restrained and heavy matters, e.g., weight of several hundred Kg, can be suitably conveyed.

However, in the preloading method disclosed in Patent Document 1, the metallic balls, whose diameter is greater than the clearance between the moving body and the metallic support rail, are fitted in the clearance, so there are some problems: the balls are deformed; rolling resistance or operation resistance of the balls must be increased, so a great driving power must be required; the support rail, the moving body and the balls must have high durability, so they must be composed of quenched steel; processing costs and production costs must be increased; and the device must be large and heavy, so great driving energy must be required. Further, a large amount of lubricant must be frequently supplied to the balls so as to reduce the rolling resistance of the balls and prevent breakage of the support rail, the moving body and the balls, namely costs and number of times of maintenance must be increased.

On the other hand, in case of conveying light matters, whose weights are less than several hundred Kg, the high cost movement device shown in Patent Document 1 is not required; thus, a movement device disclosed in Patent Document 2, in which contact bodies (a lubrication element frame and a rail lubrication element) are pressed onto a support rail (a guide rail) by an urging member (a coil spring) so as to apply a preload from a moving body (a guide carriage) to the support rail, can be used (see a paragraph 0078 and Figs. 1 and 2 of Patent Document 2).

By employing the preloading method disclosed in Patent Document 2, the operation resistance of the movement device can be smaller than that of the device disclosed in Patent Document 1, and the device can be made of light materials so that production costs, maintenance costs and number of times of maintenance can be reduced.
Patent Document 1: JP2002-122136 (paragraphs 0002 and 0019 and Figs. 1 and 2)
Patent Document 2: JP7-54843 (paragraph 0078 and Fig. 1 and 2)

### DISCLOSURE OF THE INVENTION

However, in the movement device disclosed in Patent Document 2, if a great force, which is greater than an urging force of the urging member (the coil spring), is applied to the contact body (the rail lubrication element), the urging member will be deformed and play is formed in the moving body (the guide carriage).

To solve the problem, an urging member having a great urging force, which is greater than an expected maximum force applied to the contact body, was employed so as to increase the preload.

However, frictional resistance between the contact body and the support rail must be increased, the urging member must be large in size, production costs and a weight of the device must be increased, and energy for driving the heavy device must be large.

The present invention was conceived to solve the above described problems, and an object of the present invention is to provide a movement device, which is capable of automatically eliminating a clearance between at least one contact body and a support rail without increasing preload and even with abrasion of the contact body and the support rail, so as to eliminate play in the movement device.

To solve the above described problems, the present invention has following structures. Namely, the movement device comprises: a support rail; a moving body being guided by the support rail and capable of relatively moving with respect to the support rail; a plurality of contact bodies being provided to the moving body and individually contacting the support rail form a plurality of directions; and preload means being provided to the moving body and always pressing at least one of the contact bodies toward the support rail with a prescribed force, the preload means presses the contact body of a plurality of the contact bodies, which contacts the support rail from a direction substantially opposite to a direction of a load applied to the support rail via the moving body, onto the support rail, and the preload means has one-way check means for prohibiting the contact body to move away from the support rail.

With this structure, the preload means presses the support rail to apply the preload thereto and has the one-way means for prohibiting the contact body to move away from the support rail. Therefore, a clearance formed by abrasion, etc. can be suitably eliminated and the contact body is prohibited to move away from the support rail by the one-way means, so that no clearance is formed between the support rail and the contact body and the movement device has no play even if a great force is applied to the moving body. The preload applied by the preload means is used to merely always press the contact body toward the support rail so as to eliminate the clearance between the contact body and the support rail, which is formed by the abrasion, etc., so a great preload is not required.

Further, the clearance will be easily formed on one side of the support rail, which is opposite side to which the load is applied via the moving body, but the preload means presses the contact body, which contacts the support rail from the direction substantially opposite to the direction of the load applied to the support rail via the moving body, onto the support rail, so that the clearance can be rapidly closed or eliminated.

For example, a plurality of the contact bodies individually contact the support rain from three directions, and contact faces of the support rail, which respectively contact the contact bodies, are formed such that angles formed between the adjacent contact faces are acute angles.

And, the moving body has a substantially U-shaped cross-section in a direction perpendicular to a moving direction of the moving body, and three contact bodies are provided to both end parts of the U-shape and a mid part thereof so as to bring the contact bodied into contact with the support rail from three directions, one of the contact bodies provided to the both end parts is pressed onto the support rail by the preload means.

With this structure, the moving body can enclose the support rail, so that the moving body can be held by the support rail.

The preload means comprises: a rotation body being rotatably provided to the moving body, the rotation body being connected to the contact body, directly or by a transmission member, at a position displaced from a rotational axis of the rotation body, whereby the contact body is moved to and away from the support rail by rotating the rotation body; a first urging member urging the rotation body to rotate in a direction in which the contact body is in contact with the support rail; a facing section being fixed to or engaged with the moving body, the facing section covering at least a part of an outer circumferential face or an inner circumferential face of the rotation body and having a facing surface formed such that the distance between the facing surface and the outer circumferential face or the inner circumferential face of the rotation body is gradually increased in the rotational direction of the rotation body rotated by the urging force of the first urging member; and a spherical member being provided between the outer circumferential face or the inner circumferential face of the rotation body and the facing surface of the facing section so as to be in contact with the both surfaces.

With this structure, in the preload device, the urging force of the first urging member rotates the rotational body so as to press the contact body onto the support rail and apply the preload thereto. In case that a clearance is formed between the support rail and the contact body by abrasion, etc., the rotation body is rotated by the urging force of the first urging member, so that the clearance can be eliminated. On the other hand, in case that a force which attempts to rotate the rotation body in the opposite rotational direction is applied, against the urging force of the first urging member, from the support rail via the contact body, because the distance between the rotation body and the base member is gradually reduced in the opposite rotational direction, the spherical member is clamped by the rotation body and the base member so that the reverse rotation of the rotation body can be stopped by frictional force generated between the spherical member, the rotational body and the base member (as check means) .

Therefore, the clearance caused by abrasion, etc. can be suitably closed and the reverse rotation of the rotation body is prohibited, so that no clearance is formed between the contact body and the support rail even if a great force is applied to the contact body and the rotation body, and no play is formed in the movement device.

The preload applied by the first urging member is used to merely rotate the rotation body so as to close or eliminate the clearance, which is caused by abrasion, etc. and formed between the support rail and the contact body, so a great urging force (preload) of the first urging member is not required.

For example, the rotation body is constituted by a rod whose rotational axis corresponds to said rotational axis, the facing section is constituted by a flange member, and the facing surface is formed in an inner circumferential face of the flange member.

With this structure, the preload device can be simplified and downsized.

The preload means may have a second urging member for urging the spherical member to rotate in the direction opposite to said rotational direction of the rotation body.

With this structure, the second urging member always presses the spherical member to be in contact with the rotation body and the base member, so that the reverse rotation of the rotation body can be rapidly restrained without play even if an external force against the urging force of the first urging member is applied to the rotation body.

In the movement device, a groove may be formed in a contact section of the rotation body, which contacts the spherical member, and the groove may be extended in the circumferential direction of the rotation body.

With this structure, the spherical member can be stably positioned without undesirably moving.

In the movement device, a plurality of the spherical members may be arranged in the circumferential direction of the rotation body.

With this structure, a force applied to the spherical members, the rotation body and the base member is dispersed to the spherical members when the external force against the urging force of the first urging member is applied to the rotation body, so that damaging and over-biting the rotation body, the spherical members and the base member can be restrained and the device can be driven stably.

In the movement device, the facing section may be coaxial with the rotation body and capable of independently and relatively rotating with respect to the rotation body, the preload device may have check means, which allows the facing section to rotate in said rotational direction and which prohibits the facing section to rotate in the direction opposite to said rotational direction, and the first urging member may be a spiral spring, whose one end is connected to the rotation body and whose the other end is connected to the facing section.

With this structure, the spiral spring (first urging member) can be wound by rotating the facing section in the rotational direction, so that the urging force of the spiral spring can be applied to the rotation body.

In the movement device, the preload device may have releasing means, which moves the spherical member in said rotational direction by pressing from the rear side in said rotational direction.

With this structure, the rotation body can be allowed to rotate by rotating the spherical member in the rotational direction with the releasing means.

In the movement device, the preload device may have a releasing member, which includes a press portion located on the rear side of the spherical member in said rotational direction, the releasing member may be coaxial with the rotation body and may be capable of independently and relatively rotating with respect to the rotation body, whereby the press portion moves the spherical member in said rotational direction by rotating the press portion in said rotational direction, the facing section may be engaged with the releasing member when the releasing member is rotated, whereby the facing section is rotated together with the releasing member with prescribed play, and the other end of the first urging member may be connected to the releasing member, the first urging member may be connected to the facing section by the releasing member.

With this structure, the rotation body can be allowed to rotate by rotating the spherical member in the rotational direction with the releasing member. The spiral spring (first urging member) can be wound by rotating the facing section in the rotational direction, so that the urging force of the spiral spring can be applied to the rotation body. Since the urging force of the spiral spring is applied to the releasing member in the direction opposite to the rotational direction, the press portion of the releasing member can be waited at a specific position, at which the press portion does not press the spherical member, when the releasing member is not operated.

Further, the contact body may be a roller unit having a roller, which is capable of rotating about an axis displaced from the rotational axis of the rotation body.

The support rail may be composed of a metal whose main component is aluminum, and the roller may be composed of plastic.

With this structure, the support rail is harder than the roller so that abrasion of the support rail can be prevented, and the roller is composed of the viscous material so that abrasion of the roller can be restrained.

The inventor of the present invention repeated experiments with changing materials of the support rail and the roller, and he found that, in case of using the support rail composed of an aluminum alloy and the roller composed of plastic, abrasion of the both members could be less than that of the both members having nearly equal hardness.

For example, the support rail is composed of a metal, whose main component is aluminum, and formed by extrusion molding.

With this structure, the support rail can be easily and inexpensively produced.

Even if the support rail is formed with a low accuracy extruding die, the clearance between the support rail and the roller unit can be eliminated by the preload device, so that play can be prevented.

### EFFECTS OF THE INVENTION

In the movement device of the present invention, the clearance between the contact body and the support rail can be automatically eliminated without increasing preload and even with abrasion of the contact body and the support rail, so that the movement device has no play. Especially, the clearance will be easily formed on one side of the support rail, which is the opposite side to which the load is applied via the moving body, but the preload means presses the contact body, which contacts the support rail from the direction substantially opposite to the direction of the load applied to the support rail via the moving body, onto the support rail, so that the clearance can be rapidly closed or eliminated.

### BRIEF DESCRIPTION OF THE DRAWINGS

Fig. 1 is a perspective view of a transfer apparatus A, which is used for taking out resin-molded products and in which the movement devices of the present invention are installed.
Fig. 2 is a partial enlarged view of the transfer apparatus A.
Figs. 3A and 3B are perspective views of a preload device.
Fig. 4 is a side sectional view of the preload device and a contact body.
Fig. 5 is a sectional view of the preload device taken along a line X-X.

### OPTIMUM EMBODIMENTS OF THE INVENTION

Optimum embodiments of the present invention will now be described in detail with reference to the accompanying drawings.

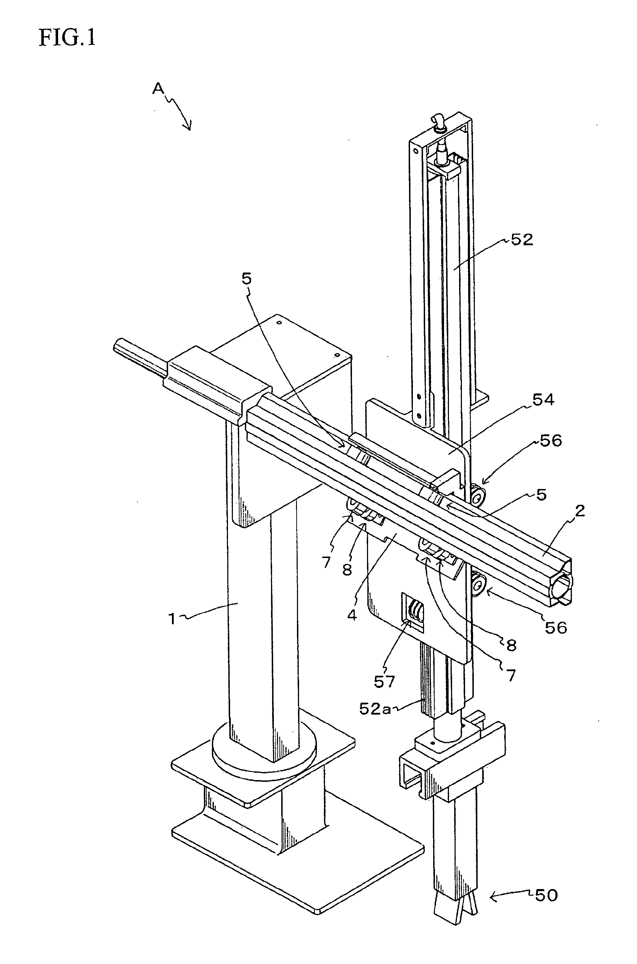

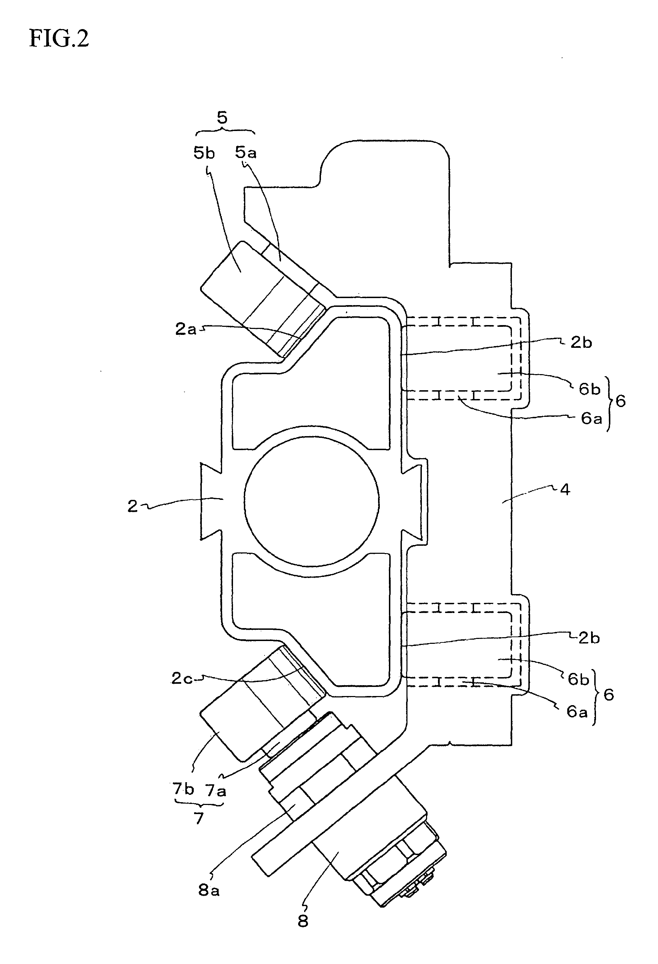

Fig. 1 is a perspective view of a transfer apparatus A, which is used for taking out resin-molded products and in which movement devices of the present embodiment are installed. Fig. 2 is a partial enlarged view of the transfer apparatus A, wherein a horizontal movement device (described later) are seen from a longitudinal end of a horizontal support rail (described later).

The transfer apparatus A comprises: a base body 1; a chucking section 50, which is opened and closed so as to clamp and release a resin-molded product; a horizontal movement device for reciprocally moving the chucking section 50 in the horizontal direction; and a vertical movement device for reciprocally moving the same in the vertical direction.

### (Horizontal Movement Device)

The horizontal movement device comprises: the horizontal support rail 2 being horizontally attached to the base body 1; a horizontal moving body 4 being capable of horizontally moving along the horizontal support rail 2; roller units 5, 6 and 7 (see Fig. 2), which act as contact bodies and which respectively have rollers 5b, 6b and 7b contacting and rolling on guide faces 2a, 2b and 2c of the horizontal support rail 2; and preload devices 8 being provided to the horizontal moving body 4 and acting as preloading means, which always press the roller units 7 onto the horizontal support rail 2 with a prescribed force.

The horizontal rail 2 is composed of aluminum alloy and formed by extrusion molding.

As shown in Fig. 2, the roller units 5 and 6 respectively include: base members 5a and 6a being fixed to the horizontal moving body 4; and the rollers 5b and 6b, which can be rotated with respect to the base members 5a and 6a and contact the guide faces 2a and 2b of the horizontal support rail 2. The roller units 7 include: base members 7a connected to the preload devices 8 fixed to the horizontal moving body 4; and the rollers 7b, which can be rotated with respect to the base members 7a and contact the guide face 2c of the horizontal support rail 2.

The rollers 5b, 6b and 7b are composed of plastic and can be smoothly rotated with, for example, built-in ball bearings.

As shown in Fig. 2, the horizontal moving body 4 has a U-shaped section in a direction perpendicular to the moving direction of the horizontal moving body 4 along the horizontal support rail 2, and the horizontal moving body entirely covers one side face of the horizontal support rail 2 and partially covers an upper face and a lower face thereof.

In the horizontal moving body 4, the roller units 5 and 7 are respectively provided in the vicinities of the both ends (an upper end and a lower end) of the U-shape, and the roller units 6 are provided to mid parts of the U-shape. The roller units 5 or 7 provided in the vicinities of the both ends, i.e., the roller units 7 contacting the horizontal support rail 2 from the lower side in the present embodiment, are pressed onto the horizontal support rail 2 by the preload devices 8. Two roller units 5 and two roller units 7 are arranged in the moving direction of the horizontal moving body 4 along the horizontal support rail 2; four roller units 6, 6.... are divided into two groups separated in the moving direction, and two units in each group are arranged in the direction perpendicular to the moving direction (in the vertical direction).

The roller units 6 contact the vertical guide face 2b formed in the one side face of the horizontal support rail 2.

The roller units 5 contact the upper guide face 2a of the horizontal support rail 2, which takes the form of an acute angle with a plane including the vertical guide face 2b.

The roller units 7 contact the lower guide face 2c of the horizontal support rail 2, which takes the form of an acute angle with the plane including the vertical guide face 2b.

With this structure, the horizontal support rail 2 is enclosed by the roller units 5, 6 and 7 attached to the horizontal moving body 4.

As shown in Fig. 2, the preload devices 8 are fixed to the horizontal moving body 4 and respectively attached to the roller units 7. The preload devices 8 penetrate opening sections of the horizontal moving body 4 and fixed to the horizontal moving body 4 by mounting sections 8a which constitute mounting means.

### (Vertical Movement Device)

As shown in Fig. 1, a vertical movement device is attached to the horizontal moving body 4.

In the vertical movement device, a rail-shaped member 52 can be relatively moved in the vertical direction with respect to the horizontal moving body 4. Namely, in the vertical movement device, the rail-shaped member 52 can be relatively moved in the vertical direction with respect to a plate member 54 attached to the horizontal moving body 4.

The vertical movement device comprises: roller units 56 and 57, which have rollers and which are provided on the plate member 54 attached to the horizontal moving body 4; the rail-shaped member 52, which has a guide face 52a contacting the rollers and whose movement is guided by the roller units 56 and 57; and preload units, not shown, being provided to the horizontal moving body 4 and always pressing the roller units 56 and 57 toward the rail-shaped member 52 with a prescribed force.

In the vertical movement device, the roller units 56 and 57 are provided on the plate member 54, and the rail-shaped member 52 is guided by the roller units 56 and 57 so as to move in the vertical direction with respect to the horizontal moving body 4.

In the apparatus including the horizontal movement device and the vertical movement device, the weight of the vertical movement device is applied to the horizontal support rail 2 via the horizontal moving body 4. Namely, the weight of the vertical movement device is applied to the horizontal support rail 2 as a vertical load downwardly applied.

The preload devices 8 press the roller units 7, which contact the horizontal support rail 2 from the side (the lower side) opposite to the side of applying the load (downward load), onto the horizontal support rail 2.

Clearances between the roller units 5, 6 and 7 and the horizontal support rail 2 are formed on the lower side of the horizontal support rail 2, which is the opposite side to the side where the load is applied to the horizontal support rail 2 via the horizontal moving body 4, but the preload devices 8 press the roller units 7, which have contacted the horizontal support rail 2, toward the horizontal support rail 2 from the opposite side to the side (the lower side) where the load is applied, so that the clearances can be rapidly closed or eliminated.

The preload devices 8 have one-way means (described later), which prohibit the roller units 7 to move away from the horizontal support rail 2. Therefore, the clearances caused by abrasion, etc. can be suitably closed or eliminated, and the one-way means maintain the roller units 7 to contact the horizontal support rail 2 against the preload, so that no clearances are formed between the roller units 5, 6 and 7 and the horizontal support rail 2 even if a great load is applied to the horizontal moving body 4, and no play is formed. The preload devices 8 apply enough preload for always pressing the roller units 7 toward the horizontal support rail 2 so as to close or eliminate the clearances between the roller units 5, 6 and 7 and the horizontal support rail 2, so that a great preload is not required.

### (Preload Device)

Successively, the preload device 8 will be explained.

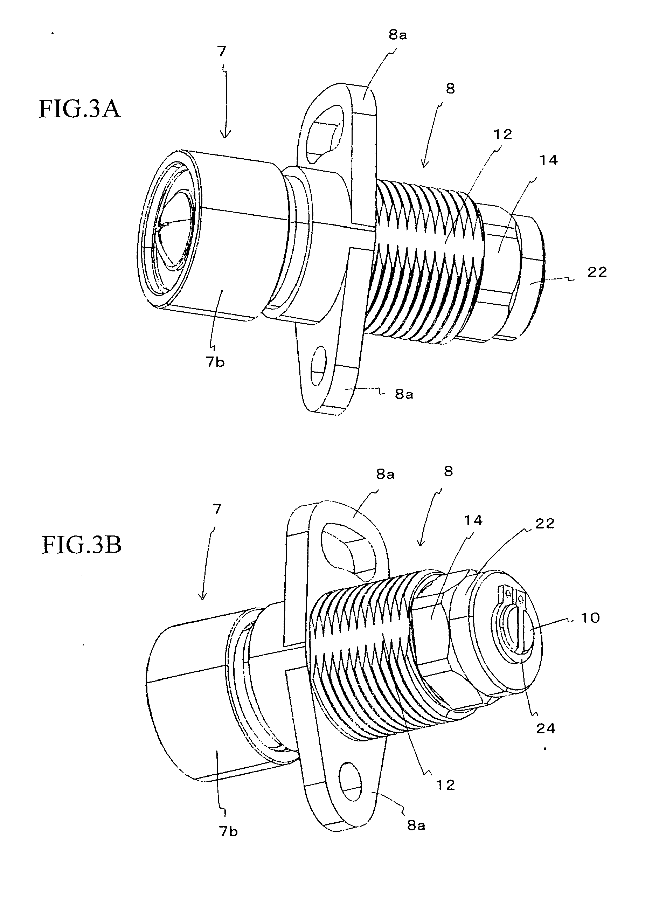

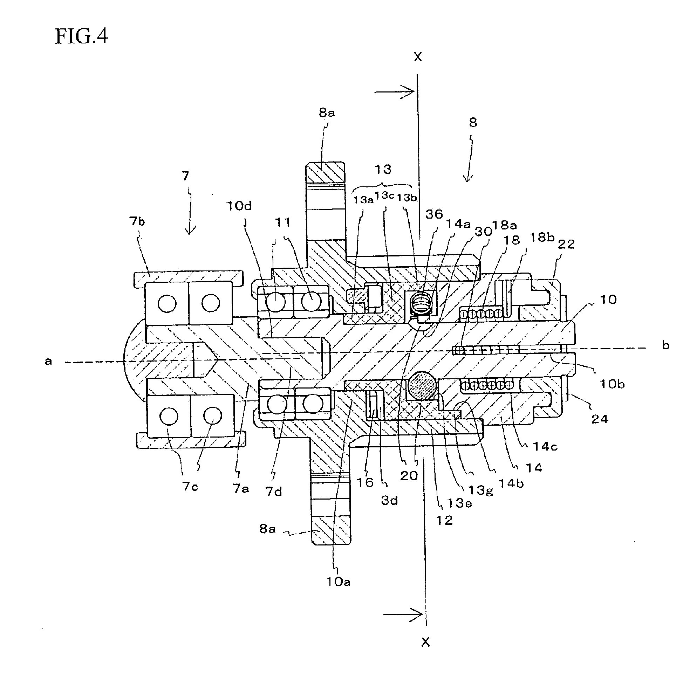

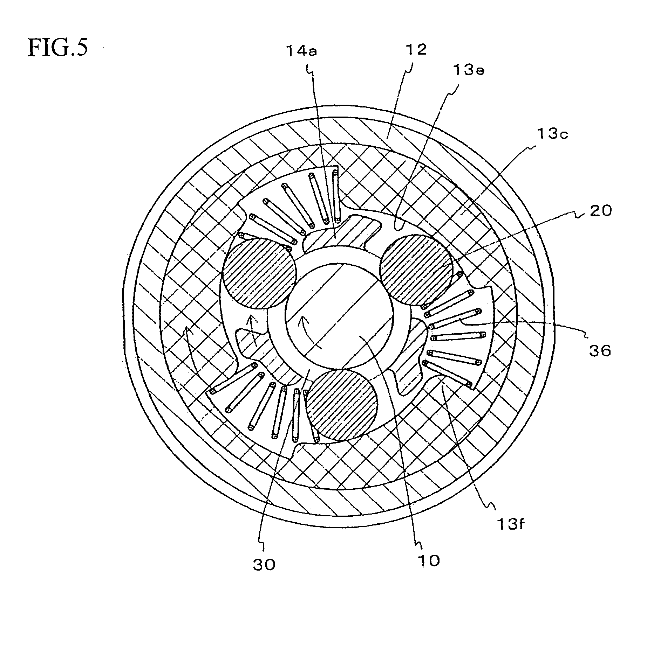

Figs. 3A and 3B are perspective views of the preload device 8 and the roller unit 7 attached to the preload device 8; Fig. 4 is a side sectional view thereof; and Fig. 5 is a sectional view taken along a line X-X.

As shown in Figs. 3A and 3B, the preload device 8 comprises: the mounting section 8a being used for attaching the preload device 8 to the horizontal moving body 4; a main body 12 having a cylindrical form and being fixed to the mounting section 8a; a rod 10 being coaxially inserted into the main body 12 and capable of rotating with respect to the main body 12, as a rotation body, with a bearing 11; a flange member 13 acting as a facing section and being coaxially provided in the main body 12, wherein the rod 10 is inserted therein; a releasing member 14 being capable of independently and relatively rotating with respect to the rod 10; a spiral spring 18 acting as a first urging member for urging the rod 10 to rotate in a prescribed direction with respect to the main body 12 (the horizontal moving body 4), wherein one end 18a of the spiral spring is connected to the releasing member 14 and the other end 18b is connected to the rod 10; and three spherical members 20, 20 and 20 being provided between the main body 12 and the rod 10 and contacting the both.

As shown in Fig. 4, the roller unit 7 comprises: a base section 7a being fixed to the rod 10 of the preload device 8; and a roller 7b being capable of rotating, with respect to the base section 7a, with a bearing 7c, the roller contacting the guide face 2c of the horizontal support rail 2.

A bolt 7d, which is extended along a rotational axis a of the roller 7b, is screwed with a female screw 10d, which is formed in one end part of the rod 10, so that the roller unit 7 can be attached to the rod 10. The roller unit 7 is attached to the rod 10 with displacing the rotational axis a from a rotational axis b of the rod 10 (i.e., the axial line of the rod 10). With this structure, the roller unit 7 is rotated about the rotational axis b, which is displaced from the rotational axis a, by rotating the rod 10, so that the roller unit is moved to and away from the guide face 2c of the horizontal support rail 2.

In the initial state, a rotational angle of the rod 10 is set to allow the roller unit 7 to move upward (i.e., the roller unit 7 is not at an uppermost position), and the preload device 8 is fixed to the horizontal moving body 4 and allows the roller 7b to contact the guide face 2c of the horizontal support rail 2. By rotating the rod 10 in the prescribed direction, the roller unit 7 is moved upward and pressed onto the guide face 2c of the horizontal support rail 2.

An outer circumferential part of the main body 12 is fixed to the mounting section 8a. By fixing the mounting section 8a to the horizontal moving body 4, the main body 12 too is fixed to the horizontal moving body 4.

The bearing 11 is provided between the main body 12 and the rod 10, so that the rod 10 can be smoothly rotated in the main body 12.

The rod 10 is inserted into the flange section 13, which is capable of independently and relatively rotating with respect to the main body 12 and the rod 10.

One end side of the flange member 13 is formed into a small diameter part 13a extended along the rod 10; the other end part is formed into a hollow large diameter part 13b, whose outer circumferential face contacts the inner face of the main body 12 and whose inner circumferential face is separated from the rod 10. In the main body 12, a step section 10a, which is inwardly extended, is formed along a step section 13c, which connects the small diameter part 13a and the large diameter part 13b of the flange section 13. A ratchet claw 16 is fixed to a facing surface of the step section 10a, which faces the flange member 13. A plurality of engage portions 13d, with which the ratchet claw can be engaged, are formed in a contact face of the flange member 13 (the opposite face with respect to a hollow part in which the spherical members 20 are provided), with which the ratchet claw 16 is in contact, and the flange member 13 is allowed to rotate in only a prescribed normal direction (the clockwise direction in Fig. 5) by the ratchet mechanism (check mechanism) constituted by the ratchet claw 16 and the engage portions 13d.

The spherical members 20 are respectively provided between facing surfaces 13e of the large diameter part 13b of the flange member 13, which faces the rod 10, and the rod 10, and they contact the facing surfaces and the rod. As shown in Fig. 5, each of the facing surfaces 13e of the large diameter part 13b of the flange member 13 is formed such that the distances between the facing surface and the outer circumferential face of the rod 10 are gradually increased in the rotatable direction of the flange member 13 (the clockwise direction in Fig. 5). A circular groove 30, which is in contact with the outer faces of the spherical members 20, 20, is formed in the outer circumferential face of the rod 10 and extended in the circumferential direction.

As shown in Fig. 5, each of the spherical members 20 is urged in the direction opposite to the movable direction of the flange member 13 (i.e., the direction of reducing the distances between the outer circumferential face of the rod 10 and the facing surface 13e of the flange member 13. Namely, the counterclockwise direction in Fig. 5), by a spring 36, which acts as a second urging member, whose one end contacts the spherical member and whose the other end is held by the step section 13f of an inner circumferential wall of the flange member 13.

As shown in Fig. 5, three combinations of the spherical member and the spring 36 are arranged in the circumferential direction of the rod 10 with angular separations of 120°.

With the above described structure, the rod 10 can freely rotate, in the clockwise direction in Fig. 5, with respect to the flange member 13, but the spherical members 20 are tightly clamped between the rod 10 and the flange member 13 when the rod is rotated in the counterclockwise direction because the distances between the rod 10 and the facing surface 13e of the flange member 13, with which the spherical members 20 are in contact, are gradually reduced in the counterclockwise direction, so that the clearances between the rod 10 and the flange member 13 are closed or eliminated, the rotation in the counterclockwise direction is prohibited by a frictional force generated by the spherical members 20, etc. and the rotation in the counterclockwise direction is prohibited (as check means).

As shown in Fig. 4, the releasing member 14 is formed into a flange-shape and coaxially pierced through the rod 10, situated next to the flange member 13 in the axial direction of the rod 10 and capable of independently and relatively rotating with respect to the rod 10. One end of the releasing member 14 is projected from the main body 12 so that a user can rotate the releasing member 14.

A cap 22 for closing a hollow part 14c of the releasing member 14 is provided on one side of the releasing member 14, which is the opposite side to the flange member 13. A snap ring 24 for retaining the flange member 13, the releasing member 14 and the cap 22 on the rod 10 is fitted on the outer side of the cap 22. The cap 22 and the snap ring 24 are capable of relatively rotating with respect to the rod 10 and/or the releasing member 14, and the relative rotation of the releasing member 14 with respect to the rod 10 is not prohibited.

The flange member 13 and the releasing member 14 are engaged by a concave part 14b, which is formed in the flange member 13 side part of the releasing member 14, and a projected part 13g of the flange member 13, which can be fitted in the concave part 14b. A small play in the circumferential direction is formed between the projected part 13g and the concave part 14b, so they can relatively turn within a prescribed angular range.

The releasing member 14 has press portions 14a, which are extended toward the flange member 13 along the rod 10. As shown in Fig. 5, each of the press portions 14a is provided between the adjacent spherical members 20. When the user rotates the releasing member 14 in the direction of increasing the distances between the outer circumferential face of the rod 10 and the facing surfaces 13e of the flange member 13, i.e., in the clockwise direction in Fig. 5, the press portions 14e can move the spherical members 20 against the urging forces of the springs 36 (as releasing means). The circumferential play between the flange member 13 and the releasing member 14, which are mutually engaged, is designed to allow the press portions 14a to press the spherical members 20. In case that the press portions 14a press the spherical members 20 and the user further rotates the releasing member 14 beyond the prescribed angular range of the play, the releasing member 14 and the flange member 13 are integrally rotated due to the engagement of the projected part 13g and the concave part 14b.

By moving the spherical members 20, by the press portions 14a of the releasing member 14, against the urging forces of the springs 36, no spherical members 20 will be clamped between the rod 10 and the flange member 13 when an external force for rotating the rod 10 in the counterclockwise direction with respect to the flange member 13 is applied to the rod, so that the rotation of the rod 10 in the counterclockwise direction can be allowed, i.e., the rotation of the rod 10 in the counterclockwise direction can be released (functions of the releasing means).

As shown in Fig. 4, the one end 18a of the spiral spring 18 is linearly formed and fitted in a cut portion 10b axially formed in the rod 10 so as to be connected to the rod 10. The other end 18b of the spiral spring 18 is linearly formed and fitted in a groove portion 14d axially formed in the releasing member 14 so as to be connected to the releasing member 14. As described above, the releasing member 14 and the flange member 13 are connected by engaging the projected part 13g with the concave part 14b, so the urging force of the spiral spring 18 can be applied to the flange member 13 and the rod 10.

Next, initial setting of the preload device 8 will be explained.

Firstly, the user rotates the releasing member 14 in the direction of increasing the distances between the outer circumferential face of the rod 10 and the facing surfaces 13e of the flange member 13, i.e., the clockwise direction in Fig. 5. With this operation, the press portions 14a of the releasing member 14 are turned, in the clockwise direction with respect to the flange member 13, within the prescribed range of the play between the projected part 13g and the concave part 14b, so that they can press the spherical members 20. Then, the spherical members 20 are moved, so that the rotation of the rod 10 in the counterclockwise direction with respect to the flange member 13 can be released.

By further rotating the releasing member 14, the flange 13, whose projected part 13g is engaged with the concave part 14b, is rotated together with the releasing member 14, and the rod 10 is also rotated in the direction, which is the same as the rotational direction of the releasing member 14, by the spiral spring 18 connected to the releasing member 14.

By rotating the rod 10, the roller unit 7, whose axial line is displaced from that of the rod 10, is moved upward, so that the roller 7b comes into contact with the guide face 2c of the horizontal support rail 2.

In the state where the roller unit 7 contacts the horizontal support rail 2 and the further movement of the rod 10 is prohibited, if the releasing member 14 is further rotated, the spiral spring 18 is wound so that an urging force in the same direction is applied to the rod 10.

If the user stops the rotation of the releasing member 14 and releases the releasing member 14, the wound spiral spring 18 applies the urging force, which rotates the releasing member 14 in the reverse direction (counterclockwise direction), to the releasing member 14. By the urging force, the releasing member 14 is rotated in the counterclockwise direction, so that the press portion 14a is moved away from the spherical member 14. Then, the spherical member 20 is returned to the initial position, at which the spherical member contacts the outer circumferential face of the rod 10 and the facing surface 13e of the flange member 13, by the urging force of the spring 36. With this action, the rotation of the rod 10 in the counterclockwise direction with respect to the flange member 13 can be prohibited (function of the check means).

Further, after the releasing member 14 is turned in the counterclockwise direction within the range of the play, the urging force of the spiral spring 18 in the counterclockwise direction is applied to the flange member 13, which has been engaged with the releasing member 14, via the releasing member 14. However, the reverse rotation of the flange member 13 is prohibited by the ratchet mechanism, so it is not rotated in the reverse direction (function of the check means).

Therefore, the urging force of the spiral spring 18 works as a force for rotating the rod 10 in the normal direction, so that the preload can be applied to the horizontal support rail 2 via the roller unit 7.

In the horizontal movement device of the present embodiment, in case that clearances are formed between the guide face 2c of the horizontal support rail 2 and rollers 7b of the roller units 7 by abrasion, etc., the rods 10 and the roller units 7 are rotated by the urging forces of the spiral springs 18, so that the roller units 7 are moved upward (lifted) and close the clearances. On the other hand, in case that an external force pressing the roller units 7 is applied to the horizontal support rail 2 while the horizontal moving body 4 is moved, the spherical members 20 are clamped by the rod 10 and the flange member 13, and the reverse rotation of the rod 10 is prohibited by the frictional force between the rod and the spherical members 20 because the clearances between the rod 10 and the flange member 13 are gradually reduced in the direction opposite to the direction of the urging force applied to the rod 10.

As described above, the clearances between the horizontal support rail 2 and the roller units 7 can be suitably closed by rotating the rods 10, and the rods 10 are not rotated in the reverse direction, therefore even if a great force is applied to the roller units 7 from the horizontal support rail 2 while the horizontal moving body 4 is moved, no clearances will be formed between the horizontal support rail 2 and the roller units 7 and no play is formed. The preloads applied by the spiral springs 18 are enough for rotating the rods 10 so as to close or eliminate the clearances between the horizontal support rail 2 and the rollers 7b, which are formed by abrasion, etc., so the urging forces (i.e., the preloads) need not be great forces retaliating against the maximum force which will be applied to the horizontal moving body 4.

Since the spherical members 20 are always in contact with the rod 10 and the flange member 13 by the spring 36, the reverse rotation of the rod 10 can be rapidly prohibited without forming play when an external force against the urging force of the spiral spring 18 is applied to the rod 10.

Since a plurality of the spherical members 20 (e.g., three spherical members) are provided around the rod 10, forces applied to the spherical members 20, the rod 10 and the flange member 13 are dispersed to a plurality of the spherical members 20. Therefore, by dispersing the forces applied to the spherical members 20, the rod 10 and the flange member 13, their abrasion and clamping with excessive forces can be prevented so that the movement device can be driven stably.

Since the other end 18b of the spiral spring 18 is connected to the flange member 13 with the releasing member 14, the spiral spring 18 can be wound and the urging force of the spiral spring 18 can be applied to the rod 10 by rotating the flange member in the normal direction with the releasing member 14.

By moving the spherical members 20 in the clockwise direction by the press portions 14a of the releasing member 14, the rotation of the rotation body can be released.

Further, the flange member 13 is engaged with the releasing member so as to rotate together with the releasing member 14 when the releasing member 14 is rotated.

By rotating the releasing member in the normal direction, the reverse rotation of the rod 10 can be allowed, and the spiral spring 18 can be wound by further rotating the releasing member 14. The urging force of the spiral spring 18 urges the releasing member 14 to rotate in the counterclockwise direction, so the press portions 14a of the releasing member 14 can be located at waiting positions, at which the press portions do not press the spherical members 20, while the releasing member 14 is not operated.

With the above described structure, the preload devices 8 of the horizontal movement device of the present embodiment have superior operational performance and maintainability.

Note that, in the above described embodiment, the rods 10 of the preload devices 8, which act as the rotation bodies, are directly connected to the roller units 7, which act as the contact bodies, but the present invention is not limited to this structure.

For example, a transmission member may be provided between the rotation body and the contact body so as to indirectly press the contact body via the transmission member.

### INDUSTRIAL APPLICABILITY

The present invention can be applied to not only the movement device for taking out resin-molded products but also many types of movement devices having moving bodies, which can be relatively moved along and with respect to support rails.

The moving body may be moved on not only the linear support rail but also a curved support rail so as to perform curvilinear motion of the moving body.

In the above described embodiments, the horizontal moving body is moved with respect to the horizontal support rail fixed to the base body, but the present invention is not limited to the device in which the support rail is fixed to the base body, so the present invention can be applied to other movement devices, e.g., the moving body is fixed to the base body and the support rail is moved with respect to the base body.

## Claims

1. A movement device,
comprising:
a support rail;
a moving body being guided by the support rail and capable of relatively moving with respect to the support rail;
a plurality of contact bodies being provided to the moving body and individually contacting the support rail form a plurality of directions; and
preload means being provided to the moving body and always pressing at least one of the contact bodies toward the support rail with a prescribed force,
wherein the preload means presses the contact body of a plurality of the contact bodies, which contacts the support rail from a direction substantially opposite to a direction of a load applied to the support rail via the moving body, onto the support rail, and
the preload means has one-way check means for prohibiting the contact body to move away from the support rail.

2. The movement device according to claim 1,
wherein a plurality of the contact bodies individually contact the support rain from three directions, and
contact faces of the support rail, which respectively contact the contact bodies, are formed such that angles formed between the adjacent contact faces are acute angles.

3. The movement device according to claim 2,
wherein the moving body has a substantially U-shaped cross-section in a direction perpendicular to a moving direction of the moving body, and
three contact bodies are provided to both end parts of the U-shape and a mid part thereof so as to bring the contact bodied into contact with the support rail from three directions, one of the contact bodies provided to the both end parts is pressed onto the support rail by the preload means.

4. The movement device according to one of claims 1-3,
wherein the preload means comprises:
a rotation body being rotatably provided to the moving body, the rotation body being connected to the contact body, directly or by a transmission member, at a position displaced from a rotational axis of the rotation body, whereby the contact body is moved to and away from the support rail by rotating the rotation body;
a first urging member urging the rotation body to rotate in a direction in which the contact body is in contact with the support rail;
a facing section being fixed to or engaged with the moving body, the facing section covering at least a part of an outer circumferential face or an inner circumferential face of the rotation body and having a facing surface formed such that the distance between the facing surface and the outer circumferential face or the inner circumferential face of the rotation body is gradually increased in the rotational direction of the rotation body rotated by the urging force of the first urging member; and
a spherical member being provided between the outer circumferential face or the inner circumferential face of the rotation body and the facing surface of the facing section so as to be in contact with the both surfaces.

5. The movement device according to claim 4,
wherein the rotation body is constituted by a rod whose rotational axis corresponds to said rotational axis,
the facing section is constituted by a flange member, and
the facing surface is formed in an inner circumferential face of the flange member.

6. The movement device according to claim 4 or 5,
wherein the preload means has a second urging member for urging the spherical member to rotate in the direction opposite to said rotational direction of the rotation body.

7. The movement device according to one of claims 4-6,
wherein a groove is formed in a contact section of the rotation body, which contacts the spherical member, and the groove is extended in the circumferential direction of the rotation body.

8. The movement device according to one of claims 4-7,
wherein a plurality of the spherical members are arranged in the circumferential direction of the rotation body.

9. The movement device according to one of claims 4-8,
wherein the facing section is coaxial with the rotation body and capable of independently and relatively rotating with respect to the rotation body,
the preload device has check means, which allows the facing section to rotate in said rotational direction and which prohibits the facing section to rotate in the direction opposite to said rotational direction, and
the first urging member is a spiral spring, whose one end is connected to the rotation body and whose the other end is connected to the facing section.

10. The movement device according to one of claims 4-9,
wherein the preload device has releasing means, which moves the spherical member in said rotational direction by pressing from the rear side in said rotational direction.

11. The movement device according to claim 9,
wherein the preload device has a releasing member, which includes a press portion located on the rear side of the spherical member in said rotational direction , the releasing member is coaxial with the rotation body and is capable of independently and relatively rotating with respect to the rotation body, whereby the press portion moves the spherical member in said rotational direction by rotating the press portion in said rotational direction ,
the facing section is engaged with the releasing member when the releasing member is rotated, whereby the facing section is rotated together with the releasing member with prescribed play, and
the other end of the first urging member is connected to the releasing member, the first urging member is connected to the facing section by the releasing member.

12. The movement device according to one of claims 1-11,
wherein the contact body is a roller unit having a roller, which is capable of rotating about an axis displaced from the rotational axis of the rotation body.

13. The movement device according to claim 12,
wherein the support rail is composed of a metal whose main component is aluminum, and
the roller is composed of plastic.

14. The movement device according to claim 12 or 13,
wherein the support rail is composed of a metal whose main component is aluminum and formed by extrusion molding.
